# EUROPÄISCHE PATENTSCHRIFT

(11) **EP 0 961 188 B1**
(45) Veröffentlichungstag und Bekanntmachung des Hinweises auf die Patenterteilung: **23.04.2003**
(21) Anmeldenummer: 99109722.1
(22) Anmeldetag: 18.05.1999
(51) Int. Cl.: G05B 19/418, B61B 10/00, B65G 47/50

(54) **Verfahren und Anordnung zum Steuern von Förderung und Bearbeitung von Stückgut**
Method and arrangement for controlling the conveying and machining of articles
Procède et dispositif de commande pour le transport et l'usinage des articles

(30) Priorität: 27.05.1998 CH 116598
(43) Veröffentlichungstag der Anmeldung: 01.12.1999
(73) Patentinhaber: Ferag AG, 8340 Hinwil (CH)
(72) Erfinder: Maeder, Carl Conrad, 8340 Hinwil (CH); Lutz, Bruno, 8624 Grüt (CH)
(74) Vertreter: Frei, Alexandra Sarah

(56) Entgegenhaltungen:
- EP-A- 0 153 201
- FR-A- 1 380 626
- FR-A- 2 070 744
- US-A- 4 707 250

## Beschreibung

Die Erfindung liegt auf dem Gebiete der Stückgutförderung und -bearbeitung. Sie betrifft ein Verfahren und eine Anordnung nach den Oberbegriffen der entsprechenden, unabhängigen Patentansprüche. Mit dem erfindungsgemässen Verfahren werden Förderung und Bearbeitung von Stückgut gesteuert. Die erfindungsgemässe Anordnung dient zur Durchführung des Verfahrens.

Unter Stückgut soll eine grosse Anzahl von gleichen oder mindestens ähnlichen Gegenständen verstanden werden, die einzeln oder in Gruppen gehalten im wesentlichen hintereinander gefördert und bearbeitet werden. Für die Förderung von Stückgut im oben definierten Sinne kommen meist in sich geschlossene Fördersysteme zur Anwendung, das heisst Fördersysteme, in denen Haltemittel zur gehaltenen Förderung je eines Gegenstandes oder einer Gegenstandsgruppe auf einem in sich geschlossenen Förderweg üblicherweise in einer vorgegebenen Richtung gefördert werden. Auf diesem in sich geschlossenen Förderweg sind mindestens eine Aufnahmestation und mindestens eine Abgabestation vorgesehen, an denen Gegenstände durch Haltemittel ergriffen bzw. Gegenstände von Haltemitteln losgelassen werden. Zwischen Aufnahmestation und Abgabestation sind die geförderten Haltemittel beladen und werden gegebenenfalls bearbeitet, zwischen Abgabestation und Aufnahmestation sind sie leer.

Die Haltemittel sind beispielsweise an einer endlosen Förderkette mit gleichen Abständen voneinander befestigt, wobei die Förderkette in einem Kettenkanal läuft und von einem geeigneten Antrieb angetrieben wird. Die Haltemittel können aber auch lose, das heisst ohne fest definierte Abstände miteinander verbunden sein oder sie können ohne Verbindungen untereinander mindestens streckenweise individuell entlang einem in sich geschlossenen Schienensystem verfahrbar sein.

In Stationen, durch die oder an denen vorbei die von Haltemitteln gehaltenen Gegenstände oder auch leere Haltemittel gefördert werden, werden Aktionen auf Gegenstände oder Haltemittel gerichtet, beispielsweise Aufnahme- oder Abgabeaktionen, Übergabeaktionen, Umpositionierungsaktionen, Bearbeitungsaktionen oder Sensoraktionen zur Erfassung von Eigenschaften von Gegenständen oder Haltemitteln. Derartige Aktionen werden mindestens teilweise durch aktive Steuerung ausgelöst und zwar für jeden der Station zugeförderten Gegenstand bzw. jedes Haltemittel oder für nur eine vorbestimmte Auswahl aus den zugeförderten Gegenständen bzw. Haltemitteln. Die Steuerung dieser Aktionen und ihre Synchronisation mit der Förderung sind wichtige Steuerfunktionen in einem System, in dem Stückgut gefördert und bearbeitet wird.

Spezifische Problemstellungen betreffend Steuerung von Förderung und Bearbeitung von Stückgut haben gemäss dem Stande der Technik zu spezifischen Lösungen geführt. Beispielsweise werden Stationen in Systemen mit Förderkette mit einem Systemtakt und gegebenenfalls einem Feintakt gesteuert. Für spezifische Aktionen betreffend vorbestimmte Gegenstände oder Haltemittel werden die Takte numeriert und für verschiedene Positionen entlang dem Förderweg anhand von ihren Abständen von einer Referenzposition hochgerechnet. Das Grundelement der Steuerung in einem derartigen System ist ein Systemtakt, der mit der momentanen Fördergeschwindigkeit korreliert ist.

In Systemen mit sehr langen Förderketten, in denen wegen Kettenlängenvarianzen eine Systemtaktsteuerung nicht mehr genügend zuverlässig ist, werden örtliche Takte generiert und/oder werden die Haltemittel sensorisch erkannt und gezählt.

Für Systeme mit lose miteinander verbundenen oder mit voneinander unabhängigen Haltemitteln wird für die Auslösung von spezifischen Aktionen für vorbestimmte einzelne Gegenstände oder Haltemittel auch vorgeschlagen, jedes Haltemittel mit einem Code oder sogar mit einem Eigenschaften des Gegenstandes enthaltenden, elektronischen Speicher auszurüsten und an den Stationen Code oder Speicher zur Identifizierung des Haltemittels oder zur direkten Auslösung der spezifischen Aktion mit geeigneten Mitteln zu lesen.

Als Stand der Technik wird die Druckschrift FR 2 070 744 genannt.

Alle genannten Lösungsansätze sind zur Lösungen spezifischer Probleme konzipiert und sind für eine allgemeinere Anwendung entweder zu aufwendig oder in ihrer Wirkung zu eingeschränkt.

Die Erfindung stellt sich die Aufgabe, ein Verfahren zum Steuern von Förderung und Bearbeitung von Stückgut aufzuzeigen, die steuerungstechnisch einfach und vorrichtungsmässig wenig aufwendig ist, derart, dass es sich sowohl für Systeme mit Förderketten mit beliebiger Länge als auch für Systeme mit mehr oder weniger voneinander unabhängigen Haltemitteln anwendbar ist, und zwar bei Einsatz von verschiedensten Stationen an frei wählbaren Stellen des Förderweges für Aktionen, die sich auf jeden zugeförderten Gegenstand bzw. Haltemittel oder nur auf eine vorbestimmte Auswahl von Gegenständen bzw. Haltemitteln beziehen. Zusätzlich soll bei Verwendung des erfindungsgemässen Verfahrens der Aufwand für die Inbetriebnahme, für einen Kaltstart, für eine statistische Überwachung des Haltemittelzustandes und für Unterhaltsarbeiten, in denen Haltemittel ersetzt werden, minimal sein. Ferner ist es die Aufgabe der Erfindung, eine Anordnung zur Durchführung des Verfahrens zu schaffen.

Diese Aufgabe wird gelöst durch das Verfahren und die Anordnung, wie sie durch die unabhängigen Patentansprüche definiert sind.

In der erfindungsgemässen Anordnung sind eine Mehrzahl der auf einem in sich geschlossenen Förderweg verfahrbaren Haltemittel als Signalgeber ausgerüstet. Jede Station weist sensorische Mittel zur Generierung eines Signals bei der Durchförderung eines Signalgebers auf. Ferner weisen die Stationen einen stationsinternen Taktgeber oder ein sensorisches Mittel zur Erkennung von zugeförderten Haltemitteln auf sowie einen Zähler zum Zählen der Takte des Taktgebers bzw. zum Zählen der durchgeförderten Haltemittel.

Durch ein von einem Signalgeber in einer Station erzeugtes Signal wird in der Station der Zähler zurückgesetzt und wird gegebenenfalls eine Phasenverschiebung zwischen Stationstakt und Fördertakt erfasst oder auf Null gesetzt. Zwischen je zwei Signalgebern ist eine Anzahl von nicht als Signalgeber ausgerüsteten Haltemitteln vorgesehen, welche Anzahl für jedes Signalgeberpaar verschieden ist. Durch die Zahl von Haltemitteln zwischen einem ersten, flussabwärts angeordneten und einem zweiten flussaufwärts angeordneten Signalgeber, welche Zahl als Stationstakte oder als sensorisch erfasste Haltemittel gezählt und erfasst wird, ist der zweite Signalgeber eindeutig identifizierbar (Signalgeber-Identifikation). Durch den momentanen Zählerstand und die Signalgeber-Identifikation des vorangehenden Signalgebers ist jedes Haltemittel, das momentan durch einen Referenzpunkt der Station gefördert wird, eindeutig identifizierbar.

Für die Auslösung von auf nur vorbestimmte Gegenstände bzw. Haltemittel gerichteten Aktionen werden zur Haltemittel-Identifizierung ein zu erreichender Zählerstand und der Zählerstand vor der letzten Rücksetzung (Signalgeber-Identifikation) an die Station übermittelt und mit dem aktuellen Zählerstand und dem Zählerstand vor der letzten Rücksetzung in der Station verglichen und bei Übereinstimmung wird die Aktion ausgelöst.

In Stationen, die mehrere, voneinander beabstandete Aktoren aufweisen oder in denen der Zählerabgriff und der Aktor voneinander beabstandet sind, wird die übermittelte Identifikation entsprechend korrigiert.

Wie bereits weiter oben erwähnt, kann das bei der Durchförderung eines Signalgebers in einer Station erzeugte Signal auch für die Erfassung einer Phasenverschiebung zwischen dem Stationstakt und dem Fördertakt oder gegebenenfalls zur Rückstellung einer derartigen Phasenverschiebung verwendet werden. Dazu wird der Zeitpunkt des Signals mit Hilfe eines Feintaktes im Stationstakt erfasst oder wird der Stationstakt auf das Signal ausgerichtet. Auf diese Weise wird die Feineinstellung der Aktionsauslösung fein auf nicht erfassbare Unregelmässigkeiten der Förderung eingestellt, was insbesondere bei rein taktgesteuerten Aktionen an weit auseinander liegenden Stationen notwendig ist.

Im Folgenden soll aufgezeigt werden, dass mit dem oben skizzierten Verfahren alle gestellten Aufgaben in einfachster Weise lösbar sind. Es ist bereits aus dem oben skizzierten Prinzip ersichtlich, dass nach dem erfindungsgemässen Verfahren Taktsynchronisation zwischen Aktionen und Förderung sowie Identifikation der Haltemittel mit denselben Mitteln bewirkt werden, nämlich mit Hilfe der durch die Signalgeber erzeugten Signale und mit Hilfe von aktuellen und gespeicherten Zählerständen, was das Verfahren schon vom Prinzip her sehr einfach macht.

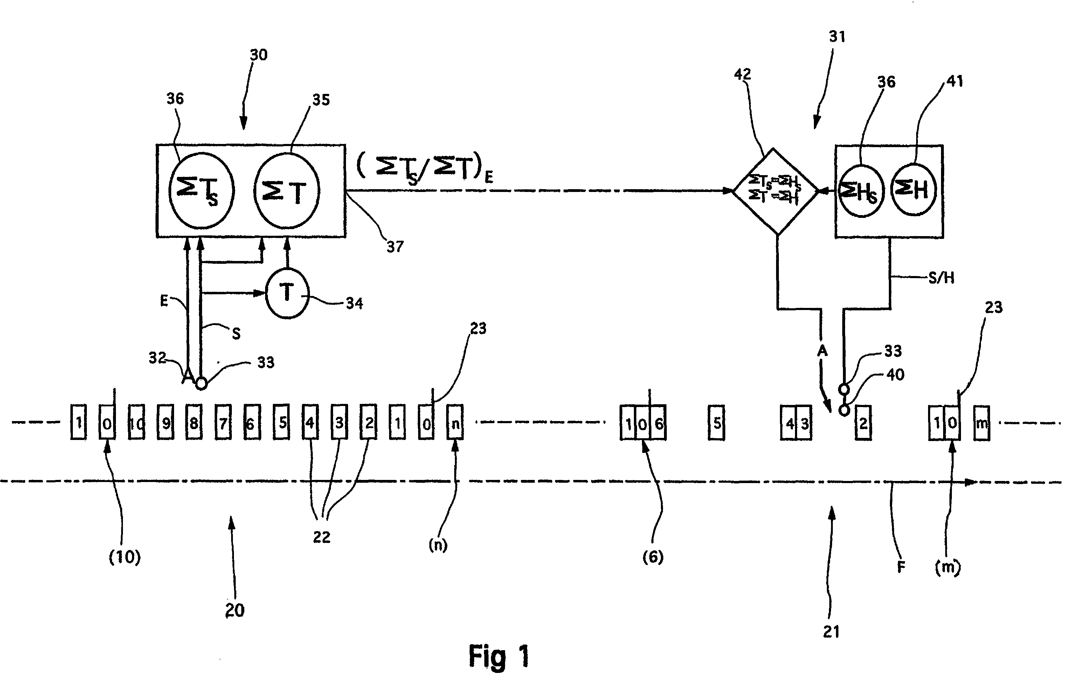

Das erfindungsgemässe Verfahren und die erfindungsgemässe Anordnung sollen nun anhand einer Figur 1 mehr im Detail beschrieben werden.
- **Figur 1**: zeigt ein Schema von Teilen einer beispielhaften Ausführungsform einer Anordnung zur Duchführung des erfindungsgemässen Verfahrens.

Die Figur 1 zeigt schematisch zwei Bereiche 20 und 21 eines in sich geschlossenen Förderweges, der als strichpunktierte, gerichtete Linie F dargestellt ist. Die auf dem Förderweg F gerichtet verfahrbaren Haltemittel 22 sind als Rechtecke dargestellt und haben im Bereich 20 gleiche, im Bereiche 21 variierende Abstände. Es handelt sich also offensichtlich um ein System mit voneinander mindestens beschränkt unabhängigen Haltemitteln, die im Bereich 20 mit einem Fördermittel (z.B. mit einer Nockenkette) angetrieben werden, durch welches Fördermittel die Abstände gleichgehalten werden. Im Bereich 21 werden die Haltemittel beispielsweise durch einen Antrieb angetrieben, an den sie mit beliebigen Abständen ankoppelbar sind (z.B. ein Antriebsseil). Von den Haltemitteln 22 gehaltene Gegenstände sind nicht dargestellt.

Von den dargestellten Haltemitteln 22 sind in beiden Bereichen 20 und 21 je zwei Haltemittel beispielsweise mit einem zusätzlichen mechanischen Teil 23 als Signalgeber (22/23) ausgerüstet. Alle Haltemittel 22 sind ferner vom vorlaufenden Signalgeber aus mit aufsteigenden Nummern bezeichnet, welche die Zählerstände bei Ihrem Durchlaufen von Referenzpositionen wiedergibt. Die Signalgeber sind zusätzlich durch die Anzahl der vorlaufenden Haltemittel ohne Signalgeberfunktion bezeichnet (Signalgeber-Identifikation in Klammern). In den beiden Bereichen 20 und 21 ist ferner je eine beispielhafte Station 30 und 31 als funktionelle Einheit dargestellt. In diesen Stationen werden auf Gegenstände oder Haltemittel 22 gerichtete Aktionen ausgelöst.

Die Station 30 ist eine Station, in der beispielsweise mit sensorischen Mitteln 32 spezifische Ereignisse E (beispielsweise fehlerhafte Gegenstände, spezifische Eigenschaften von Gegenständen) detektiert und mit einer Identifikation des zugehörigen Haltemittels korreliert werden. Zu diesem Zwecke weist die Station 30 zusätzlich ein Signalgeber-Erkennungsmittel 33 zur Detektion von Signalgebern und zur Generierung des Signals S (Signalgeber-Signal), einen Taktgeber 34, einen Taktzähler 35 mit einem aktuellen Zählerstand ΣT und einen Speicher 36 zum Speichern des Taktzählerstandes ΣT_{S} vor der Zählerrückstellung auf. Das Signal S bewirkt das Überschreiben des Speichers 36 mit dem aktuellen Zählerstand, das Rücksetzen des Taktzählers auf Null und gegebenenfalls eine Synchronisation zwischen Förderung und Taktgeber 34 (Aufhebung oder Erfassung einer Phasenverschiebung). Der Taktgeber 34 initiiert in regelmässigen Abständen die sensorischen Mittel 32 und bewirkt in jedem Takt eine Zählererhöhung. Im dargestellten Moment ist der Speicherinhalt ΣT_{S} = n (Zahl der nicht als Signalgeber ausgerüsteten Haltemittel zwischen dem Signalgeber (n) und einem vorlaufenden Signalgeber, der nicht dargestellt ist) und der aktuelle Zählerstand ist gerade auf 8 erhöht worden. Durch das nächste Signal S wird der Speicherinhalt ΣT_{S} auf 10 gesetzt.

Wenn durch die sensorischen Mittel 32 ein Ereignis E registriert wird, wird ein Satz von Identifikationsdaten (ΣT_{S}/ΣT)_{E} erstellt, der aus dem Inhalt ΣT_{S} des Speichers 36 (Signalgeber-Identifikation) und aus dem für das Ereignis E aktuellen Zählerstand ΣT_{E} besteht. Dieser Datensatz wird durch einen Ausgang 37 an Stationen weiter stromabwärts, beispielsweise an die Station 31 übermittelt, gegebenenfalls zusammen mit Daten, die sich auf das detektierte Ereignis oder in der Station 30 detektierte Eigenschaften des mit dem Identifikationsdatensatz korrelierten Gegenstandes oder Haltemittels.

Die Station 31 ist beispielsweise eine Station, in der auf spezifische Gegenstände bzw. Haltemittel (beispielsweise auf Haltemittel mit fehlerhaftem Gegenstand) gerichtete Aktionen ausgelöst werden (beispielsweise Loslassen des fehlerhaften Gegenstandes). Die Station ist im Bereich 21 angeordnet, in dem die Haltemittel 22 mit beliebig variierbaren Abständen gefördert werden. Die Station weist neben einem Signalgeber-Erkennungsmittel 33 zur Detektierung von Signalgebern und Generierung eines entsprechenden Signals S ein Haltemittel-Erkennungsmittel 40 zum Detektieren von Haltemitteln und zum Generieren eines entsprechenden Signals H auf. Die Station weist ferner einen Signalzähler 41 und wie die Station 30 einen Speicher 36 zur Speicherung des Zählerstandes vor der Rücksetzung auf. Der Zähler 41 wird durch jedes Signal H um eins erhöht. Ein Signal S bewirkt die Überschreibung des Speichers 36 mit dem aktuellen Zählerstand ΣH_{S} und die Rücksetzung des Zählers 41 auf Null.

Die Station 31 weist ferner eine Vergleichereinheit 42 auf, in der der Speicherinhalt ΣH_{S} und der aktuelle Zählerstand ΣH der Station mit Identifikationsdatensätzen, z.B. (ΣT_{S}/ΣT)_{E}, die von weiter stromaufwärts angeordneten Stationen, beispielsweise von der Station 30 übermittelt wurden, verglichen werden. Beispielsweise wird dann bei Übereinstimmung eine Aktion A ausgelöst oder wird aus einer Auswahl verschiedener Aktionen diejenige ausgelöst, die mit zusammen mit dem Identifikationsdatensatz übermittelten Eigenschaftsdaten korreliert ist.

Die Station 31 ist auch als Übergabestation denkbar, das heisst als Station deren Aktion darin besteht, dass Gegenstände von den Haltemitteln des betrachteten ersten Systems an Haltemittel eines gattungsgleichen, zweiten Systems übergeben werden. Eine derartige Station weist auch für das zweite System Mittel zum Erfassen von Signalgebern, Mittel zum Zählen von Takten oder Haltemitteln und einen Speicher zur Speicherung von Zählertständen auf. Identifikationsdatensätze des ersten Systems werden in einer derartigen Station mit Identifikationsdatensätzen des zweiten Systems korreliert und Ereignisdaten oder Eigenschaftsdaten werden von dieser Station mit den neuen Identifikationen an Stationen im zweiten System übermittelt.

Die Figur zeigt verschiedene Merkmale der erfindungsgemässen Anordnung in einer beispielhaften Zusammensetzung, durch die die Erfindung aber nicht limitiert sein soll. Es ist selbstverständlich möglich, dass die Haltemittel im Bereiche aller Stationen mit den gleichen Abständen gefördert werden (System mit einer endlosen Förderkette) oder in allen Stationen mit variierbaren Abständen. Es ist ferner ohne weiteres möglich, eine Station mit Aktionsauslösung in der Art der Station 30 (Taktsteuerung) zu betreiben und umgekehrt eine Station zur Detektion von Ereignissen mit Haltemittel-Erkennungsmitteln anstelle des Taktgebers zu betreiben. Ferner ist es auch möglich, in der gleichen Station mehrere Aktoren (zur Detektion von Ereignissen und/oder zur Auslösung von Aktionen) vorzusehen, für welche Aktoren der massgebende aktuelle Zählerstand gemäss ihren Abständen vom Signalgeber-Erkennungsmittel 33 bzw. Haltemittel-Erkennungsmittel 40 vor dem Vergleich mit Identifikationsdatensätzen zu korrigieren sind.

Die Identifikationsdatensätze müssen nicht zwingend von einer Station wie die Station 30 erzeugt und an weitere Stationen übermittelt werden, sondern können auch in einer zentralen Steuereinheit aufgrund von ausserhalb des Systems generierten Daten erzeugt und von dort an die Stationen übermittelt werden.

Als Erkennungsmittel für Signalgeber können beispielsweise in den Stationen Lichtschranken vorgesehen sein, die von einem den Signalgeber auszeichnenden, zusätzlichen mechanischen Teil unterbrochen werden, wie dies durch den mechanischen Teil 23 der Signalgeber 22 dargestellt ist. Eine gleiche Anordnung kann auch für die Haltemittel-Erkennung vorgesehen werden. Auch Erkennungsmittel mit Laserquelle und Reflexionssensor sind denkbar, wobei der Laserstrahl der Laserquelle durch einen den Signalgeber auszeichnenden Reflektor in den Reflexionssensor reflektiert wird und ein Signal erzeugt

Aus der Figur ist ersichtlich, dass das erfindungsgemässe Verfahren in im wesentlichen gleicher Weise anwendbar ist für mit festen und gleichen Abständen geförderte Haltemittel, für mit beliebig variierbaren Abständen geförderte Haltemittel und auch für Systeme in denen die genannten Förderarten bereichsweise angewendet werden. Aus der Funktion der Stationen der erfindungsgemässen Anordnung ist ferner zu ersehen, dass die Förderwegstelle, an der eine derartige Station positioniert wird, keinen Einfluss hat auf das Verfahren. Bei einer Inbetriebnahme muss keine Systemkonfiguration für die Förderwegpositionen der Stationen vorgenommen werden. Nur die Abstände von verschiedenen Aktoren und sensorischen Mitteln innerhalb von taktgesteuerten Stationen müssen in der Station auch softwaremässig konfiguriert sein.

Die Figur zeigt nur die für das erfindungsgemässe Verfahren wesentlichen Funktionen der Stationen. Die Stationen können daneben weitere fast beliebig auswählbare Funktionen aufweisen.

Bei der Inbetriebnahme einer erfindungsgemässen Anordnung ist weder eine Konfiguration für die Signalgeber-Identifikationen noch ein leerer Durchgang zum selbsttätigen Erlernen dieser Identifikationen notwendig. Es genügt vollauf, zwei Signalgeber durch Stationen, die Identifikationsdatensätze generieren, durchzufördern. Damit sind alle nachfolgenden Haltemittel eindeutig identifizierbar. Dasselbe gilt für einen Kaltstart, das heisst für einen Start nach einem mindestens teilweisen Verlust von Zählerständen und Speicherinhalten oder mit ungültigen Zählerständen und Speicherinhalten.

In einem nach dem erfindungsgemässen Verfahren gesteuerten System können die Haltemittel ohne weiteres bei jedem Durchgang an einer Kontrollstation vermessen werden und die Messdaten für eine statistische Überwachung des Haltemittelzustandes ausgewertet werden. Die Messdaten oder aus diesen statistisch errechneten Kontrolldaten werden einfach mit den korrespondierenden Haltemittel-Identifikationen gespeichert, wobei die Haltemittel-Identifikationen in einer solchen Kontrollstation in der gleichen Weise wie in anderen Stationen zu ermitteln sind.

Wenn bei einer Revision des Systems Haltemittel ersetzt werden müssen, ist es nicht relevant, ob die neuen Haltemittel an derselben Stelle oder an einer anderen Stelle eingesetzt werden. Es ist lediglich dafür zu sorgen, dass keine Anzahlen von Haltemitteln zwischen zwei Signalgebern entstehen, die einander gleich sind oder dass solche gleichen Anzahlen mindestens sehr weit voneinander entfernt sind. Da bei Haltemittel-Ersatz ohne Beibehaltung der exakten Haltemittel-Position die Korrelation von Zählerstand und Haltemittel für die betroffenen Sektoren (Haltemittelgruppe zwischen zwei bestimmten Signalgebern) nach einer derartigen Revision nicht mehr dieselbe ist, muss die statistische Zustandsüberwachung für die betroffenen Sektoren nach einer derartigen Revisionsarbeit neu gestartet werden.

## Patentansprüche

1. Verfahren zum Steuern von Förderung und Bearbeitung von einer grossen Zahl von gleichen oder mindestens ähnlichen Gegenständen, die einzeln oder gruppenweise von je einem Haltemittel (22) einer grossen Zahl von auf einem in sich geschlossenen Förderweg (F) hintereinander verfahrbaren Haltemitteln (22) gehalten durch Stationen (30, 31) oder an Stationen (30, 31) vorbei gefördert werden, in welchen Stationen (30, 31) auf Gegenstände oder Haltemittel (22) gerichtete Aktionen (A) ausgelöst werden, **dadurch gekennzeichnet, dass** von der grossen Zahl von Haltemitteln (22) eine Mehrzahl als Signalgeber (22/23) ausgerüstet wird, derart, dass zwischen je zwei Signalgebern (22/23) eine verschiedene Anzahl von nicht als Signalgeber ausgerüsteten Haltemitteln angeordnet ist, dass in jeder Station (30, 31) Signalgeber (22/23) detektiert und entsprechende Signalgeber-Signale (S) generiert werden, dass initiiert durch ein Signalgeber-Signal (S) ein Speicher (36) mit dem aktuellen Zählerstand (ΣT, ΣH) eines Zählers (35, 41) überschrieben und der Zählerstand (ΣT, ΣH) auf Null gesetzt wird und dass für die Auslösung von auf spezifische Gegenstände oder Haltemittel (22) gerichtete Aktionen (A) Identifikationsdatensätze ((ΣT_{S}/ΣT)_{E}) bestehend aus spezifischem Speicherinhalt und spezifischem Zählerstand generiert, an Stationen (31) übermittelt und in Stationen (31) mit aktuellem Speicherinhalt (ΣT_{S}, ΣH_{S}) und aktuellem Zählerstand (ΣT, ΣH) verglichen werden.

2. Verfahren nach Anspruch 1, **dadurch gekennzeichnet, dass** der Zähler (35, 41) von einem Taktgeber (34) erzeugte Takte (T) zählt oder mittels sensorischer Erfassung von Haltemitteln (22) erzeugte Haltemittel-Signale (H).

3. Verfahren nach einem der Ansprüche 1 oder 2, **dadurch gekennzeichnet, dass** die Identifikationsdatensätze ((ΣT_{S}/ΣT)_{E}) in Stationen (30) erzeugt und an Stationen (31), die weiter flussabwärts angeordnet sind, übermittelt werden.

4. Verfahren nach einem der Ansprüche 1 bis 3, **dadurch gekennzeichnet, dass** die generierten Signalgeber-Signale (S) auch verwendet werden für eine Bestimmung oder Rücksetzung einer Phasenverschiebung zwischen einem Stationstakt und einem lokalen Fördertakt.

5. Verfahren nach einem der Ansprüche 1 bis 4, **dadurch gekennzeichnet, dass** in mindestens einer Kontrollstation Merkmale der Haltemittel (22) erfasst, statistisch ausgewertet und zusammen mit Identifikationsdatensätzen (ΣT_{S}/ΣT) der betreffenden Haltemittel (22) gespeichert werden.

6. Anordnung zur Durchführung des Verfahrens nach Anspruch 1, welche Anordnung eine grosse Anzahl von auf einem in sich geschlossenen Förderweg (F) gerichtet und hintereinander verfahrbaren Haltemitteln (22) aufweist und Stationen (30, 31), die am Förderweg (F) angeordnet sind und in denen auf von Haltemitteln (22) gehaltene Gegenstände oder auf Haltemittel (22) gerichtete Aktionen auslösbar sind, **dadurch gekennzeichnet, dass** von der grossen Zahl von Haltemitteln (22) eine Mehrzahl als Signalgeber (22/23) ausgerüstet ist, derart, dass zwischen je zwei Signalgebern (22/23) eine verschiedene Anzahl von nicht als Signalgeber ausgerüsteten Haltemitteln angeordnet ist, dass die Stationen (30, 31) Mittel (33) zum Detektieren von zugeförderten Signalgebern (22/23) und zur Generierung von Signalgeber-Signalen (S) aufweisen sowie einen Zähler (35, 41) und einen überschreibbaren Speicher (36) zur Speicherung eines Zählerstandes (ΣT, ΣH) des Zählers (35, 41) und dass mindestens ein Teil der Stationen (31) Mittel zum Empfangen von Identifikationsdatensätzen (ΣT_{S}/ΣT)_{E} und Mittel (42) zum Vergleich der empfangenen Identifikationsdatensätze (ΣT_{S}/ΣT)_{E} mit dem Inhalt des Speichers (36) und mit dem aktuellen Zählerstand (ΣT, ΣH) aufweisen.

7. Anordnung nach Anspruch 6, **dadurch gekennzeichnet, dass** die Stationen (30, 31) einen Taktgeber (34) oder ein Haltemittel-Erkennungsmittel (40) aufweisen und dass der Zähler (35, 41) mit dem Taktgeber (34) oder mit dem Haltemittel-Erkennungsmittel (40) wirkverbunden ist derart, dass er die Takte oder die erkannten Haltemittel (22) zählt.

8. Anordnung nach einem der Ansprüche 6 oder 7, **dadurch gekennzeichnet, dass** mindestens ein Teil der Stationen (30) Mittel zum Generieren von Identifikationsdatensätzen ((ΣT_{S}/ΣT)_{E}) aufweisen und dass Mittel zum Übermitteln von Identifikationsdatensätzen ((ΣT_{S}/ΣT)_{E}) an andere Stationen (31) vorgesehen sind.

9. Anordnung nach einem der Ansprüche 6 bis 8, **dadurch gekennzeichnet, dass** mindestens eine der Stationen (30, 31) eine Kontrollstation ist, in der Haltemitteldaten erfasst und mit Identifikationsdatensätzen korreliert werden.

10. Anordnung nach einem der Ansprüche 6 bis 9, **dadurch gekennzeichnet, dass** die Haltemittel (22) mit gleichen Abständen an einer endlosen, angetriebenen Kette befestigt sind.

11. Anordnung nach einem der Ansprüche 6 bis 9, **dadurch gekennzeichnet, dass** die Haltemittel (22) individuell oder lose miteinander verbunden auf einem in sich geschlossenen Schienensystem verfahrbar sind.

## Claims

1. Method for controlling conveyance and processing of a large number of identical or at least similar objects whereby single objects or groups of objects are each held and conveyed by one holding means (22) of a large number of holding means (22) being movable on a conveying path (F) being closed in itself and whereby the objects are conveyed through stations (30, 31) or past stations (30, 31) in which actions directed to objects or holding means are triggered, **characterized in that** of the large number of holding means (22) a plurality is equipped as signalling holding means (22/23) such that between each two signalling holding means (22/23) there is a different number of non-signalling holding means, that in each station (30, 31) signalling holding means (22/23) are detected and corresponding signals (S) are generated, that, initiated by signals (S), a memory (36) is overwritten with a current reading (ΣT, ΣH) of a counter (35, 41) and the counter reading (ΣT, ΣH) is reset to zero and that for triggering actions (A) directed to objects or holding means (22), sets of identification data ((ΣT_{S}/ΣT)_{E}) consisting of specific memory contents and specific counter readings are generated, are transmitted to stations (31) and are compared to current memory contents (ΣT_{S}, ΣH_{S}) and current counter readings (ΣT, ΣH).

2. Method according to claim 1, **characterized in that** the counter (35, 41) counts time cycles (T) generated by a clocking means (34) or counts signals (H) generated on sensory detection of holding means (22).

3. Method according to one of claims 1 and 2, **characterized in that** the sets of identification data ((ΣT_{S}/ΣT)_{E}) are generated in stations (30) and are transmitted to stations (31) located further downstream.

4. Method according to one of claims 1 to 3, **characterized in that** the generated signals (S) are further used for determining or resetting a phase displacement between a station lock and a local conveying clock.

5. Method according to one of claims 1 to 4, **characterized in that** in at least one monitoring station, characteristics of the holding means (22) are registered, statistically evaluated and stored together with sets of identification data (ΣT_{S}/ΣT) for each holding means (22).

6. Arrangement for carrying out the method according to claim 1, which arrangement comprises a large number of holding means (22) being movable behind each other on a conveying path (F) being closed in itself and which arrangement further comprises stations (30, 31) arranged on the conveying path (F) in which stations actions (A) directed to objects held by holding means (22) or to holding means are triggered, **characterized in that** of the large number of holding means (22), a plurality is equipped as signalling holding means (22/23) such that between each two signalling holding means (22/23) there is a different number of non-signalling holding means, that the stations (30, 31) comprise means for detecting signalling holding means (22/23) and means for generating signals (S) on detection of a signalling holding means as well as a counter (35, 41) and an overwriteable memory (36) for storing counter readings (ΣT, ΣH) and that at least one part of the stations (31) comprise means for receiving sets of identification data (ΣT_{S}/ΣT)_{E} and means (42) for comparing received sets of identification data (ΣT_{S}/ΣT)_{E} with the contents of the memory (36) and with the current counter reading (ΣT, ΣH).

7. Arrangement according to claim 6, **characterized in that** the stations (30, 31) comprise clocking means (34) or means (40) for detecting holding means and that the counter (35, 41) is functionally coupled to the clocking means or to the means (40) for detecting holding means such that it counts time cycles or detected holding means.

8. Arrangement according to one of claims 6 or 7, **characterized in that** at least part of the stations (30) comprise means for generating sets of identification data ((ΣT_{S}/ΣT)_{E}) and means for transmitting sets of identification data ((ΣT_{S}/ΣT)_{E}) to other stations (31).

9. Arrangement according to one of claims 6 to 8, **characterized in that** at least one station (30, 31) is a monitoring station in which measuring data of holding means is registered and correlated with sets of identification data.

10. Arrangement according to one of claims 6 to 9, **characterized in that** the holding means (22) are mounted on an driven endless chain having all the same distances from each other.

11. Arrangement according to one of claims 6 to 9, **characterized in that** the holding means (22) are movable individually or loosely connected to each other on a rail system which is closed in itself.

## Revendications

1. Procédé pour commander le transport et le traitement d'un grand nombre d'objets identiques ou au moins analogues qui sont tenus, isolément ou par groupes, à chaque fois par un moyen de support (22) qui fait partie d'un grand nombre de moyens de support (22) qu'on peut faire circuler les uns à la suite des autres sur un parcours de transport (F) refermé sur lui-même, objets qui sont transportés à travers des stations (30, 31) ou en passant au droit de stations (30, 31), dans lesquelles stations (30, 31) sont déclenchées des actions (A) dirigées sur les objets ou sur les moyens de support (22), **caractérisé en ce que**, parmi le grand nombre de moyens de support (22), une pluralité sont équipés en tant qu'émetteurs de signaux (22/23) d'une façon telle que, dans les intervalles entre deux émetteurs de signaux (22/23) sont disposés des nombres différents de moyens de support non équipés en tant qu'émetteurs de signaux, **en ce que**, dans chaque station (30, 31), des émetteurs de signaux (22/23) sont détectés et des signaux (S) d'émetteurs de signaux correspondants sont générés, **en ce que**, par déclenchement par un signal (S) d'émetteur de signaux, une mémoire (36) contenant l'état de compteur actuel (ΣT, ΣH) d'un compteur (35, 41) est écrasée et l'état de compteur (ΣT, ΣH) est mis à zéro et **en ce que**, pour le déclenchement d'actions (A) dirigées sur des objets ou moyens de support (22) spécifiques, des jeux de données d'identification ((ΣT_{S}/ΣH)_{E}) composés d'un contenu de mémoire spécifique et d'un état de compteur spécifique sont générés, transmis à des stations (31) et comparés dans les stations (31) au contenu de mémoire actuel (ΣT_{S}, ΣH_{S}) et à l'état de compteur actuel (ΣT, ΣH).

2. Procédé selon la revendication 1, **caractérisé en ce que** le compteur (35, 41) compte des impulsions de rythme (T) produites par un émetteur d'impulsions (34) ou des signaux de moyens de support (H) produits par la détection de moyens de support (22) par des capteurs.

3. Procédé selon une des revendications 1 ou 2, **caractérisé en ce que** les jeux de données d'identification ((ΣT_{S}/ΣT)_{E}) sont produits dans des stations (30) et transmis à des stations (31) qui sont disposées plus loin en aval.

4. Procédé selon une des revendications 1 à 3, **caractérisé en ce que** les signaux (S) d'émetteurs de signaux générés sont aussi utilisés pour une détermination ou une remise à zéro d'un déphasage entre un rythme de station et un rythme de transport local.

5. Procédé selon une des revendications 1 à 4, **caractérisé en ce que**, dans au moins une station de contrôle, des caractéristiques des moyens de support (22) sont acquises, analysées statistiquement et mémorisées avec des jeux de données d'identification (ΣT_{S}/ ΣT) des moyens de support (22) concernés.

6. Dispositif pour la mise en oeuvre du procédé selon la revendication 1, lequel dispositif comprend un grand nombre de moyens de support (22) qui peuvent circuler, dans un état orienté, les uns à la suite des autres, sur un parcours de transport (F) refermé sur lui-même, et des stations (30, 31) qui sont disposées le long du parcours de transport (F) et dans lesquelles des actions dirigées sur les objets portés par les moyens de support (22) ou sur les moyens de support (22) sont déclenchées, **caractérisé en ce que**, parmi le grand nombre de moyens de support (22), une pluralité sont équipés en tant qu'émetteurs de signaux (22/23) d'une façon telle que, dans les intervalles entre deux émetteurs de signaux (22/23) sont disposés des nombres différents de moyens de support non équipés en tant qu'émetteurs de signaux, **en ce que** les stations (30, 31) comprennent des moyens (33) destinés à détecter des émetteurs de signaux (22/23) arrivants et à générer des signaux (S) d'émetteurs de signaux, ainsi qu'un compteur (35, 41) et une mémoire (36) pouvant être écrasée destinée à mémoriser un état de compteur (ΣT, ΣH) du compteur (35, 41) et **en ce qu'**au moins une partie des stations (31) comprennent des moyens destinés à recevoir des jeux de données d'identification (ΣT_{S}/ΣH)_{E} et des moyens (42) destinés à comparer les jeux de données d'identification (ΣT_{S}/ΣH)_{E} reçus au contenu de la mémoire (36) et à l'état de compteur actuel (ΣT, ΣH).

7. Dispositif selon la revendication 6, **caractérisé en ce que** les stations (30, 31) comprennent un émetteur de rythme (34) ou un moyen (40) de reconnaissance de moyens de support et **en ce que** le compteur (35, 41) est relié opérationnellement à l'émetteur de rythme (34) ou au moyen (40) de reconnaissance des moyens de support de telle manière qu'il compte les impulsions de rythme ou les moyens de support (22) reconnus.

8. Dispositif selon une des revendications 6 ou 7, **caractérisé en ce qu'**au moins une partie des stations (30) comprennent des moyens pour générer des jeux de données d'identification ((ΣT_{S}/ΣH)_{E}) et **en ce qu'**il est prévu des moyens pour la transmission de jeux de données d'identification ((ΣT_{S}/ΣH)_{E}) à d'autres stations (31).

9. Dispositif selon une des revendications 6 à 8, **caractérisé en ce qu'**au moins une des stations (30, 31) est une station de contrôle dans laquelle des données de moyens de support sont acquises et corrélées avec des jeux de données d'identification.

10. Dispositif selon une des revendications 6 à 9, **caractérisé en ce que** les moyens de support (22) sont fixés à écartement régulier à une chaîne sans fin entraînée.

11. Dispositif selon une des revendications 6 à 9, **caractérisé en ce que** les moyens de support (22) peuvent circuler sur un système à rails refermé sur lui-même, soit individuellement, soit en étant reliés entre eux d'une façon non bloquée.
